# EUROPEAN PATENT SPECIFICATION

(11) **EP 1 184 602 B1**
(45) Date of publication and mention of the grant of the patent: **29.10.2003**
(21) Application number: 00830590.6
(22) Date of filing: 30.08.2000
(51) Int. Cl.: F16H 57/02, B29C 45/14

(54) **Method for manufacturing a container provided with a pressure compensation device and container thus manufactured**
Methode zur Herstellung eines Behälters mit einer Druckausgleichsvorrichtung und einem derart hergestelltem Behälter
Méthode de fabrication d'un récipient comportant un dispositif à compensation de pression et récipient fabriqué d'après cette méthode

(43) Date of publication of application: 06.03.2002
(73) Proprietor: GVS S.P.A., 40069 Zola Predosa (Bologna) (IT)
(72) Inventor: Scagliarini, Marco, 40135 Bologna (IT)
(74) Representative: Modiano, Guido, Dr.-Ing.

(56) References cited:
- DE-A- 19 702 685
- US-A- 4 900 441
- US-A- 5 885 499
- US-A- 5 894 180

## Description

The present invention relates to a method for manufacturing a container provided with a pressure compensation device and to a container thus manufactured.

Such device is particularly used in the openings of containers in which a constant pressure drop is to be maintained and, by way of the application of a hydrophobic membrane of the Gore-Tex commercial type, the infiltration of water and fluids in general from outside is to be prevented.

Compensation devices are already known and disclosed in DE-U-8707254 in which the hydrophobic membrane is inserted in a seat which is formed in the wall of the container that internally accommodates a power-window motor. The hydrophobic membrane is fixed mechanically in the seat in counterpressure, i.e., so as to withstand the thrust stresses produced by the pressure generated inside the container as a consequence of the operation of the contained apparatus, for example the power-window motor. Fixing occurs by using an elastic washer which is shaped like a perforated plate.

Another compensation device, disclosed in EP-0417344 B1, is also known in which the membrane is preassembled by gluing and is placed in counterpressure in the receptacle of a safety ring, which is inserted in a seat formed in the container. The safety ring is fixed in the seat, and the hydrophobic membrane is therefore arranged in counterpressure on the opening, by means of a circular band which is applied peripherally to the safety ring, so as to prevent extraction caused by the pressure applied to said ring by the fluid.

These compensation devices are often complicated to manufacture during the assembly step and often operate irregularly owing to the fact that said hydrophobic membranes may be damaged during assembly, which occurs substantially by mechanically assembling components.

The aim of the present invention is to obviate the above-cited drawbacks and to provide a method for manufacturing a container provided with a compensation device which is economically valid and safe over time.

This aim is achieved by the present method for providing a container provided with a pressure compensation device, characterized in that it comprises the steps of:
-- providing a mold constituted by a male element and a female element which have respective mutually opposite raised portions at the region where said device is arranged;
-- coupling said male element and said female element so as to form a compartment which is shaped like said container;
-- positioning said compensation device between said raised portions;
-- injecting molten plastics in said compartment so as to allow the border regions of said compensation device to be imbibed by said molten plastics;
-- opening the mold so as to obtain said container with said compensation device integrated therein, according to the preceding steps.

Within the scope of this aim, an object of the present invention is to achieve the above aim with a structure which is simple, relatively easy to provide in practice, safe in use and effective in operation.

Further characteristics and advantages will become better apparent from the detailed description of a preferred but not exclusive embodiment of a method for manufacturing a container provided with a pressure compensation device and of a container thus obtained, according to the invention, illustrated only by way of non-limitative example in the accompanying drawings, wherein:
Figure 1 is a sectional view of a container which includes the compensation device provided according to the method;
Figure 2 is a schematic view of a mold adapted to manufacture the container shown in Figure 1.

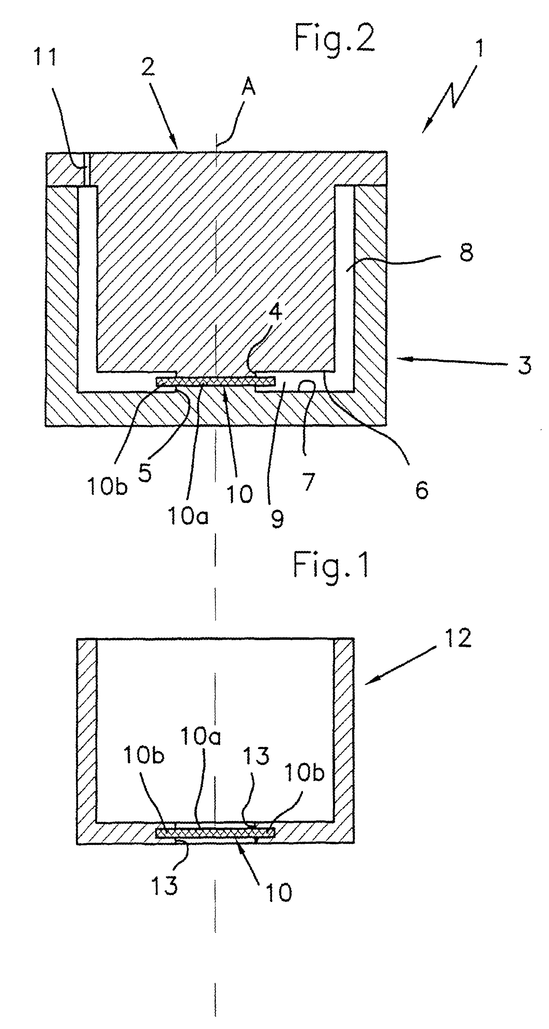

A mold used in the method is generally designated by the reference numeral 1 with particular reference to Figures 1 and 2.

According to the method, the mold 1 is constituted by a male element 2 and a female element 3 which have, at the region where the compensation device is arranged, mutually coaxial circular raised portions 4 and 5. Conveniently, the raised portions 4 and 5 are located on the bottoms 6 and 7. According to the method, the male element 2 and the female element 3 are coupled along the common axis A of the raised portions 4 and 5, so as to form a compartment 8 which forms, at the bottoms 6 and 7, an interspace 9 in which a compensation device, constituted by a circular hydrophobic membrane 10, is arranged between the two raised portions 4 and 5. The membrane 10 is arranged so that the circular central portion 10a is compressed by the raised portions 4 and 5 and the border region 10b protrudes into the space formed by the compartment 8. After completing the arrangement of the hydrophobic membrane 10, molten plastics is injected through the hole 11 so that it thoroughly imbibes the border region 10b. After a sufficient time for the cooling of the plastics, the mold 1 is opened, spacing the male element 2 from the female element 3, so as to obtain a container 12 in which the hydrophobic membrane 10 is intimately embedded, said membrane forming an opening 13 which is impermeable to the passage of fluids and solids at the central portion 10a, as shown in Figure 2.

It has thus been shown that the invention achieves the intended aim and object.

The pressure compensation device thus conceived, according to the illustrated method, allows easy application in the opening of the container and effective operation.

Moreover, auxiliary elements to ensure the fixing and seal on the opening of the membrane are not required, since said fixing and seal are ensured by the integration of the compensation device in the container 12.

The container can be used for the most disparate purposes, such as for example the possibility to accommodate a motorized device, for example a power-window motor. In this case, the container is closed hermetically so that during the operation of the motor constant pressure values are obtained inside the container through the hydrophobic membrane 10 and external fluids are prevented from entering the container 12 and damaging its motor.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for providing a container provided with a pressure compensation device, **characterized in that** it comprises the steps of:
-- providing a mold constituted by a male element (2) and a female element (3) which have respective mutually opposite raised portions (4, 5) at the region where said device is arranged;
-- coupling said male element (2) and said female element (3) so as to form a compartment (8) which is shaped like said container;
-- positioning said compensation device (10) between said raised portions;
-- injecting molten plastics in said compartment (8) so as to allow the border regions (10b) of said compensation device (10) to be imbibed by said molten plastics;
-- opening the mold so as to obtain said container (12) with said compensation device (10) integrated therein, according to the preceding steps.

2. The method according to the method of claim 1, **characterized in that** said raised portions (4, 5) are mutually coaxial and have a circular shape.

3. A container made according to the method of one of the preceding claims, **characterized in that** said compensation device is a hydrophobic membrane (10).

4. The container according to claim 3, **characterized in that** said membrane (10) is adapted to maintain a constant internal pressure of said container (12) and to prevent the external infiltration of fluids.

## Patentansprüche

1. Verfahren zur Bereitstellung eines Behälters, der mit einer Druckkompensationsvorrichtung versehen ist, **dadurch gekennzeichnet, daß** es die folgenden Schritte umfaßt:
- Vorsehen einer Form, die durch ein Steckerelement (2) und ein Hohlelement (3) gebildet ist, welche jeweilige einander gegenüberliegende erhabene Teile (4, 5) in dem Bereich aufweisen, in dem die Vorrichtung angeordnet wird;
- Koppeln des Steckerelements (2) und des Hohlelements (3), um eine Kammer (8) auszubilden, die wie der Behälter geformt ist;
- Positionieren der Kompensationsvorrichtung (10) zwischen den erhabenen Teilen;
- Einspritzen von geschmolzenem Kunststoff in die Kammer (8), um zu ermöglichen, daß die Randbereiche (lOb) der Kompensationsvorrichtung (10) mit dem geschmolzenen Kunststoff durchtränkt werden;
- Öffnen der Form, um den Behälter (12) mit der gemäß den vorangehenden Schritten in diesen integrierten Kompensationsvorrichtung (10) zu erhalten.

2. Verfahren nach dem Verfahren von Anspruch 1, **dadurch gekennzeichnet, daß** die erhabenen Teile (4, 5) zueinander koaxial sind und eine kreisförmige Form aufweisen.

3. Behälter, der gemäß dem Verfahren nach einem der vorangehenden Ansprüche hergestellt ist, **dadurch gekennzeichnet, daß** die Kompensationsvorrichtung eine hydrophobe Membran (10) ist.

4. Behälter nach Anspruch 3, **dadurch gekennzeichnet, daß** die Membran (10) dazu ausgelegt ist, einen konstanten Innendruck des Behälters (12) aufrechtzuerhalten und das externe Eindringen von Fluiden zu verhindern.

## Revendications

1. Procédé de fabrication d'un récipient comprenant un dispositif à compensation de pression, **caractérisé en ce qu'**il comprend les étapes consistant à :
fournir un moule constitué d'un élément male (2) et d'un élément femelle (3) ayant des parties relevées respectives mutuellement opposées (4,5) dans la région où ledit dispositif est agencé ;
accoupler ledit élément mâle (2) et ledit élément femelle (3) afin de former un compartiment (8) qui a la même forme que ledit récipient ;
positionner ledit dispositif à compensation (10) entre lesdites parties relevées ;
injecter de la matière plastique fondue dans ledit compartiment (8) afin de permettre aux régions marginales (10b) dudit dispositif à compensation (10) d'être imbibées par ladite matière plastique fondue ;
ouvrir le moule afin d'obtenir un récipient (12) avec ledit dispositif à compensation (10) intégré à celui ci, conformément aux étapes précédentes.

2. Procédé selon la revendication 1, **caractérisé en ce que** les parties relevées (4,5) sont mutuellement coaxiales et ont une forme circulaire.

3. Récipient fabriqué conformément au procédé de l'une des revendications précédentes, **caractérisé en ce que** ledit dispositif à compensation est une membrane hydrophobe (10).

4. Récipient selon la revendication 3, **caractérisé en ce que** ladite membrane (10) est adaptée afin de maintenir une pression interné constante dudit récipient (12) et d'empêcher une infiltration de fluides de l'extérieur.
